# EUROPEAN PATENT APPLICATION

(11) **EP 1 717 104 A1**
(43) Date of publication of application: **02.11.2006**
(21) Application number: 05380087.6
(22) Date of filing: 28.04.2005
(51) Int. Cl.: B60R 5/04, B60R 7/02

(54) **Package tray for vehicles**

(71) Applicant: Grupo Antolin Ingenieria, S.A., 09007 Burgos (ES)
(72) Inventor: Antolin-Fernandez, Adelaida, 09006 Burgos (ES); Gutierrez Diez, Héctor, 09003 Burgos (ES)
(74) Representative: Carpintero Lopez, Francisco

(57) **Abstract**

Package tray configured to be coupled in a horizontal position between the passenger compartment and the boot of a vehicle, allowing to store objects inside it. Advantageously, the tray can be folded or unfolded vertically to change the space available to store objects. The tray comprises at least one module (1, 1', 1", 1'''), extractable from inside the vehicle to be used as a suitcase, which comprises a first panel (2), a second panel (3) parallel to the former panel, a foldable wall (4) that extends between said panels (2, 3) and which has at least one opening (5) and attachment means (6) for attaching it to the inside of the vehicle. To facilitate their use as suitcases, the modules (1, 1', 1", 1"') can incorporate grip elements (12, 13) and rolling means (14).

## Description

### OBJECT OF THE INVENTION

The present invention relates to a package tray meant to be installed on the rear part of motor vehicles, separating the passenger compartment from the boot area.

### BACKGROUND OF THE INVENTION

Motor vehicles are provided behind the back seats with a tray meant to separate the passenger compartment from the boot or area provided to carry objects.

These trays, normally placed at a height corresponding to the top of the boot and therefore coinciding with the upper edge of the back seats, have evolved from the trays installed initially so that they do not only act as a separation means but also carry out additional functions.

Thus, for example, documents EP 1 356 992 A1 and EP 1 182 085 A1 describe trays constituted by two panels parallel to each other that define a space between them, to create a ventilation duct that allows air to pass between the passenger compartment and the boot.

Another example of a tray with additional functions is that described in document FR 2 566 722 A1, which relates to a tray that conceals the winding mechanism of a curtain that can be deployed as a sunshade. The tray described in this document, in additional to the usual configurations meant to facilitate placing objects on the tray, also has a compartment closed by a hinged lid that allows storing small objects inside it.

Other documents are known which describe various trays provided with compartments or other means that allow storing objects such that the objects remain ordered and separated from the space intended for carrying luggage and larger objects. Thus, Japanese documents JP 10 138 840 A describes a tray comprised of two parallel panels between which a space of a short height is defined meant to store objects. The upper panel is covered by a sheet which closes the opening of the intermediate space, which is accessed from the vehicle boot.

The tray defined in JP 08 072 618 A has two small lateral compartments closed by corresponding hinged lids and a larger lid centred on the tray which provides access to the boot. The impossibility of adapting the space to the size of the objects stored implies a drawback that must be considered, as in the previously analysed invention, as a space is provided which may occasionally be too small.

The folding tray of document EP 0 761 503 A1 acts as a lid for a container placed beneath it, at the top of the boot space. The container is provided with a number of transversally arranged mobile panels, so that the space of said container may be divided into several compartments of variable size. The possibility of adapting the horizontal space available represents an advantage over previous inventions.

Inventions are also known related to trays which can store objects and are also totally or partially removable from the vehicle's interior. This is the case in the invention described in document JP 10 119 649 A, where several horizontal trays vertically displaceable in the vehicle's boot space may be removed from the boot, to become tables with hinged lids on their top surface providing access to the hollow space inside said trays.

Document EP 1 382 490 describes a storage system which can be removed from the boot. The invention consists in this case of a conventional tray provided with a number of hinged lids providing access to vertical containers having means of attachment on their upper area to attach them to the bottom surface of the tray. These attachment means allow to separate the containers from the tray, making it easier to carry the objects contained in them when required.

All known inventions related to trays for vehicles which, acting as a separation between the passenger compartment and the boot, have the property of allowing to store objects, also have the drawback that the space available for said storage has a fixed volume. This property is disadvantageous, as it can occur that the space available is not large enough to store the objects, whether due to their number or their size, so that in this case the storage space incorporated becomes useless. If the space available to store objects is large, to avoid the aforementioned situation, it may be excessively large, thereby wasting boot volume.

In view of the above, the object of the present invention is to develop a package tray for vehicles that overcomes the aforementioned drawbacks and provides a functionality in addition to acting as a separation element between the passenger compartment and the boot while providing an element for storing objects.

### DESCRIPTION OF THE INVENTION

After studying known package trays, it has been found that it would be convenient for the space provided to store objects to have adaptable dimensions, so that the tray is configured in a manner allowing to adapt the space available for said storage according to the object to be stored, both in the tray and in the boot. Thus, it would be desirable for the tray compartments to occupy a minimum space when they are not used to house objects, to avoid reducing the boot capacity.

It is also considered advantageous to have a tray configuration allowing a simple extraction of the object-carrying compartments, thereby facilitating carrying said objects out of the vehicle without having to take them out of the compartments in which they are housed. Advantageously, the tray object of this invention can be removed completely, so that the maximum boot capacity is available when carrying large objects.

The invention therefore consists of a tray configured to be assembled in a horizontal position on the top part of the area comprised between the passenger compartment and the boot of a vehicle, having at least one compartment for storing objects. The tray object of the invention comprises at least one module that can be coupled between the passenger compartment and the boot by attachment means, so that the module(s) constituting the tray may be removed from the vehicle, thereby freeing the area between the passenger compartment and the boot to allow carrying large objects in said boot. When the tray is coupled by the attachment means provided in its modules, near the top edge of vehicle's back seats (the conventional position of known trays) the tray is placed above the boot, thereby freeing its lower area to allow transporting objects inside it.

As will be seen further below, the tray object of this invention may comprise a single module or two or more adjacent modules, in both cases covering the free surface between the passenger compartment and the boot.

Each of the modules comprises the aforementioned attachment means, a first panel, a second panel placed parallel to the first panel, and a foldable wall that extends peripherally from the first panel to the second panel, this is, said foldable wall extends from the area next to the peripheral edge of the first panel to the area next to the peripheral edge of the second panel, thereby configuring between the two panels, movable with respect to each other, a compartment inside which the objects to be carried may be stored.

The foldable wall may consist of a flexible element or by several unfolding rigid elements. If it is a single flexible element, telescopic rods or any other elements are provided to stiffen the foldable wall and maintains it in its unfolded position when so required, such as when the tray is removed from inside the vehicle while containing objects. If on the other hand the foldable wall consists of several rigid elements, these will be constituted such that when they are unfolded they act as supporting element, keeping the module unfolded.

As the peripheral wall is foldable regardless of its constitution, the height of the compartment defined between the two panels and said wall will change according to the relative displacement of the panels, allowing to adapt the space available for storing objects in the tray according to the requirements at each moment.

The panels constituting the modules will be arranged horizontally when the tray is coupled to the vehicle, the first panel being above the second, so that said first panel fulfils the functions of currently known trays, supporting any objects that are placed on it. As mentioned above, the panels are arranged parallel to each other and the possibility is considered that they may be similar in shape and size, and may even be symmetrical with respect to a horizontal axis when they are coupled to the vehicle, so that when the wall that extends between them is fully folded the peripheral edges of the two panels coincide.

To provide access to the interior of the compartment defined by each pair of panels and their corresponding foldable wall, said wall having an opening usually placed in parallel to the panels, such that it allows introducing or removing the objects from said compartment. The possibility is considered that said opening may be closed by closure means, such as zippers, buckles or clips, in order to prevent an accidental exit of the objects housed in the compartment.

As stated above, the tray may be removed from the vehicle or be coupled in the corresponding zone, for which said tray is provided with attachment means provided in each module. Said attachment means may consist, for example, of a number of protrusions in correspondence with a number of housings in the vehicle, normally on the rear of the back seats and on the perimeter of the top part of the boot, where the tray object of this invention will be coupled.

In a first embodiment said attachment means are comprised in the first panel or upper panel of the tray when the tray is coupled to the vehicle, so that said first panel will remain fixed and the second or lower panel will move vertically with respect to the first panel, changing the length of vertical wall between said panels and thereby changing the height of the compartment defined by the two panels and the foldable wall.

In another possible embodiment the second or bottom panel of the tray, when the tray is coupled to the vehicle, comprises the attachment means. In this case the second panel remains fixed and it is the first panel that moves vertically with respect to it, changing the height of the compartment in the same way as in the previous case.

If no objects will be stored inside the tray, it is desirable that its height is as short as possible, thereby providing the greatest possible storage capacity of the boot. The tray height will be a minimum when the foldable wall between the panels is fully folded, so that the height of the tray can correspond to approximately the sum of the thickness of the two panels in the case that said panels are completely joined when the foldable wall is folded. To keep the panels joined, the possibility is considered of including means for attachment between them, which may consist for example of a first magnet on the first panel, normally in an area next to its peripheral edge and a second magnet in correspondence with said first magnet on the second panel. Also considered is any other constitution of the means for attachment between each pair of panels such as hooks, clips, Velcro or any other.

On the other hand, to keep the foldable wall open when desired, thereby maintaining the two panels separated to provide access to the compartment in a convenient manner, both when the tray is coupled in the vehicle and when it is removed from it, the tray may incorporate stiffening means such as telescopic rods. These rods are placed inside the compartment, so that they are not visible when the opening made in he flexible wall is closed, and extend from the first to the second panel. Also considered is the possibility that these stiffening means adopt any configuration other different from said rods.

In order to facilitate placing the objects to be carried in the tray, one or more dividing panels can be incorporated inside the compartment defined by the panels and the foldable wall. Said panels are folding, as is the peripheral wall, and extend from the first panel to the second panel, thereby dividing the interior of the compartment into several parts depending on the number of panels provided. The dividing panels can be of the type which fold using membranes acting as hinges, such as with a Z shape, or have any other construction allowing them to fold, such as those discussed for the peripheral foldable walls that define the compartment.

The internal division of the compartment allows placing the objects in an ordered manner inside it, for a better administration of the space available to store said objects. Obviously, the length of said dividing panels when fully unfolded will be approximately the same as that of the unfolded peripheral wall.

The tray described may comprise, as mentioned before, a single module, which in this case has approximately the same shape and size as the upper part of the area between the passenger compartment and the boot, so that it will cover said space in the same way as known trays.

In another possible embodiment of the invention, the tray comprises at least two adjacent modules which, as when the tray comprises of a single module, cover the upper part of the area between the passenger compartment and the boot. In this second embodiment of the invention, which provides the same possibilities as the tray comprised of a single element, as it can have the same accessories discussed above (attachment means, closure means, etc.), the configuration of the modules is such that when they are placed adjacent to each other they complement each other, so that the first panels form an apparently continuous surface interrupted on its peripheral edges, as do the second panels. In this way, when all the modules are coupled to the vehicle the surface defined by the first panels will have the same appearance as conventional trays.

In order for the adjacent modules included in the tray to remain joined to each other, the possibility is considered that said modules comprise attachment means, normally incorporated on the area next to their peripheral edges or even on said edge itself, which is where the adjacent modules contact each other. In a possible embodiment said attachment means can consist of a tongue and groove construction of the peripheral area of the first and second panels, so that the adjacent modules are joined by the interference of peripheral lips provided in one of the modules which are inserted in the corresponding groove made in the adjacent module. Said attachment means may however be of any other type, such as hooks, clips, magnets or Velcro strips placed in the lateral perimeter of the first panels, the second panels or both.

Therefore, in the case that the tray comprises two or more modules, each one will have means for attaching it to the corresponding area of the vehicle and means for attaching it to the adjacent module. This configuration of the modules allows extracting any one module, leaving the rest anchored in their corresponding position in the vehicle. For this reason, the possibility is considered of the tray comprising a concealment element that covers the modules, said concealment element being placed on its upper surface, corresponding to the surface defined by the first panels of the modules. The incorporation of this concealment element, which may be flexible, similar to a curtain or a horizontal rolled sheet, or stiff, allows covering the empty space determined when removing one or several modules.

To facilitate carrying the objects contained in the modules once they have been removed from the vehicle, the modules can include gripping elements, understanding as such any type of handle, grip or knob that helps carry the module. With the same purpose, the incorporation is also considered of rolling elements such as wheels in the modules. In this manner, each module may be used as a conventional suitcase with a handle and wheels once it is removed from the vehicle. This configuration allows having as many suitcases as there are modules in the tray at all times in the vehicle's boot, without this implying a significant loss of capacity of said boot as when the modules are empty they can be folded as explained above, so that in this case the height of the tray is approximately that corresponding to the sum of the thickness of the first and second panel of the modules.

In the embodiment in which the tray comprises a single module, a large suitcase will be available with several compartments determined by the internal dividing panels, which as described above can divide the interior of the compartment defined by the first panel, the second panel and the foldable wall that extends between them.

In the other possible embodiment in which the tray comprises two or more modules, in addition to the aforementioned characteristics for trays with a single module, several suitcases will be available with variable sizes and shapes according to the configuration of said modules.

In any of these cases the tray according to the present invention has a number of advantages compared to known trays, as it is a tray that can act as a separation between the passenger compartment and the boot and also allows storing and ordering objects inside it, in each case adapting the space available for storage according to the size of the objects. It can also be folded so that the vertical space occupied by the tray is minimal and the capacity of the boot is barely reduced.

### DESCRIPTION OF THE DRAWINGS

To complete the description being made and in order to aid a better understanding of the characteristics of the invention, according to an example of a preferred embodiment, a set of drawings is accompanied as an integral part of the description where, for purposes of illustration only and in a non-limiting sense the following is shown:
Figure 1 shows a perspective view of a first embodiment of the package tray object of this invention.
Figure 2 shows a cross section of the tray of figure 1 along the plane A-A.
Figure 3 shows a cross section of the tray of figure 1 along the plane B-B when said tray is folded.
Figure 4 shows a perspective view of a second embodiment of the package tray coupled to a vehicle.
Figure 5 shows a perspective view of the tray of figure 4 when said tray is unfolded.
Figure 6 shows the modules of figures 4 and 5 after they have been extracted from the vehicle to be used as suitcases.

### PREFERRED EMBODIMENT OF THE INVENTION

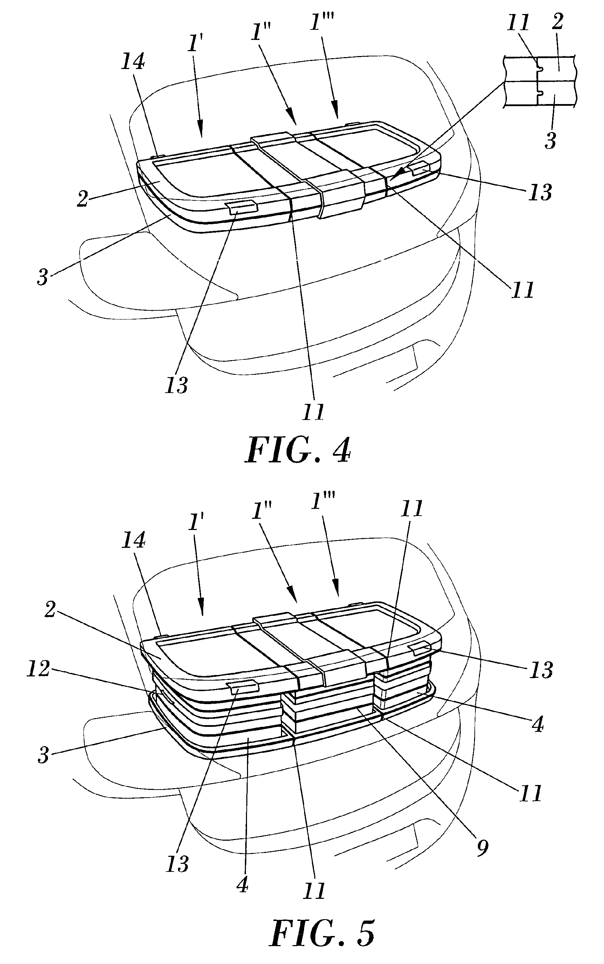

In view of the figures two examples of embodiments of the invention can be seen, consisting of a package tray configured to be coupled in a horizontal position above the area comprised between the passenger compartment and the boot of a vehicle, as represented in figures 4 and 5.

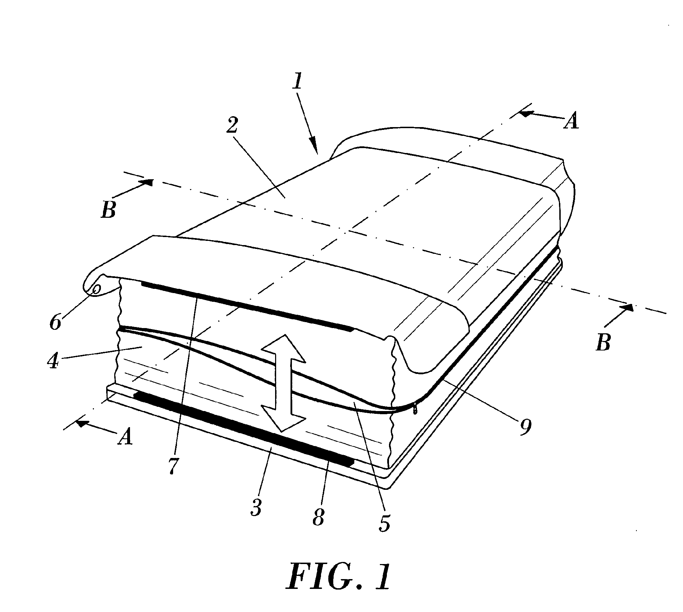

Figures 1, 2 and 3 represent a first embodiment of the tray, in which said tray comprises a single module (1) that covers the upper part of the area extending between the rear of the back seats and the boot of the vehicle. A possible second embodiment of the tray is represented in figures 4, 5 and 6, showing a tray comprising three modules (1', 1 ", 1''') which after being extracted from inside the vehicle can be used as suitcases.

Figure 1 shows a perspective view of the package tray according to a first embodiment. This figure represents the tray not coupled to the vehicle and in an unfolded position, in which it can contain objects inside it. In this case the tray consists of a single module (1) with a shape and size similar to those of the space comprised between the passenger compartment and the boot of the vehicle.

The module (1) comprises a first panel (2), which after coupling the tray to the vehicle will be on top and therefore will perform the functions of conventional trays, supporting any objects placed on it. The second panel (3), placed on the bottom, has a similar configuration to the first panel (2) both in shape and dimensions, although in this case the two panels (2, 3) are not symmetrical about a horizontal plane as may be the case in other embodiments.

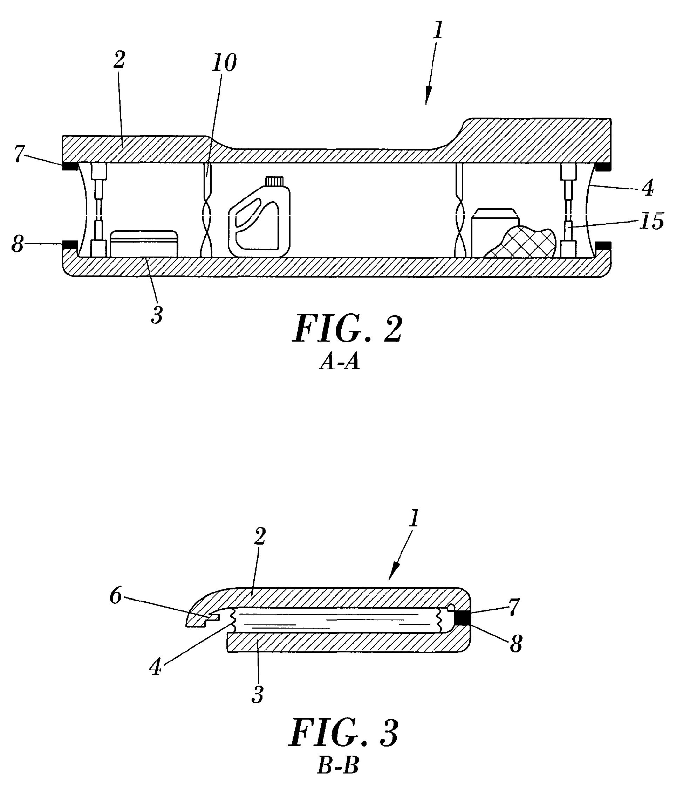

The foldable wall (4) that joins the two panels (2, 3), which in figures 1 and 2 is represented unfolded, is joined to the area next to the peripheral edge of said panels (2, 3) by known means such as soldering or applying adhesive. The foldable wall (4), together with the first panel (2) and the second panel (3), defines a compartment of variable height in which it is possible to introduce objects such as oil cans, tools or small spare parts normally stored in vehicle boots. In this case, the foldable wall (4) is constituted by a flexible element in which stiffening elements (15) are provided, which in this embodiment consist of telescopic rods (15) shown in figure 2, in order to stiffen it and maintain it in its unfolded position when so required. Access to the compartment is provided by an opening (5) of the foldable wall (4), said opening (5) represented in this case partially closed by a zipper (9).

To allow coupling the tray inside the vehicle attachment means (6) have been foreseen which in this case consist of protrusions made in the first panel (2) such that they insert in corresponding housings made in the vehicle (such as by incorporating parts with said housings behind the back seats). As in this specific embodiment of the invention the attachment means are incorporated in the first panel (2), said panel (2) will remain at a constant height when it is installed in the vehicle, the second panel (3) being displaced downward to extend the foldable wall (4) and increase the height of the compartment, increasing its capacity considerably.

To maintain the two panels (2, 3) attached to each other, as represented in figure 3 where the foldable wall (4) between them is fully folded so that the height of the compartment is a minimum, means (7, 8) have been incorporated for attaching the panels (2, 3). In this embodiment said attachment means (7, 8) consist of a first magnet (7) placed on the first panel (2) and a second magnet (8) placed on the second panel (3) in correspondence with the first magnet.

In this first embodiment in which the tray comprises a single module (1), the volume of the compartment defined by the first panel (2), the second panel (3) and the foldable wall (4) is considerable, so that two folding dividing panels (10) have been incorporated inside it which divide the inner space into three parts, in order to allow an orderly arrangement of the objects. Figure 2, which represents the cross section of the tray of figure 1 along the plane A-A, shows said dividing panels (10), which in this embodiment are folded by membranes acting as hinges.

Figures 4 and 5 show a second embodiment of the tray, which in this case consists of three modules (1', 1", 1"') which, after being joined adjacent to one another, configure the tray that covers the top of the area defined between the passenger compartment and the boot of the vehicle in which it has been coupled.

Each module (1', 1", 1'") comprises, as the module (1) described above, a first panel (2), a second panel (3), a foldable wall (4) between the panels (2, 3) and means (6) for attaching the module (1', 1 ", 1'") to the inside of the vehicle.

Figure 4 represents the tray when folded, in which position it performs the usual functions as a separation between the internal areas of the vehicle and a support of any objects placed on its surface. The tray has the same appearance as conventional trays, as the fits panels (2) of the three modules (1', 1", 1'") form an apparently continuous surface, interrupted only by the peripheral edges of each module (1', 1 ", 1 "').

Figure 5, in which the tray is unfolded and therefore it is possible to introduce objects in it, clearly shows the foldable wall (4) of each of the three modules (1', 1", 1"'). This figure also shows the attachment means (11), which in this case consist of a tongue and groove arrangement of the peripheral area of the first panels (2) and second panels (3), which means (11) maintain the adjacent modules (1', 1 ", 1"') joined to each other.

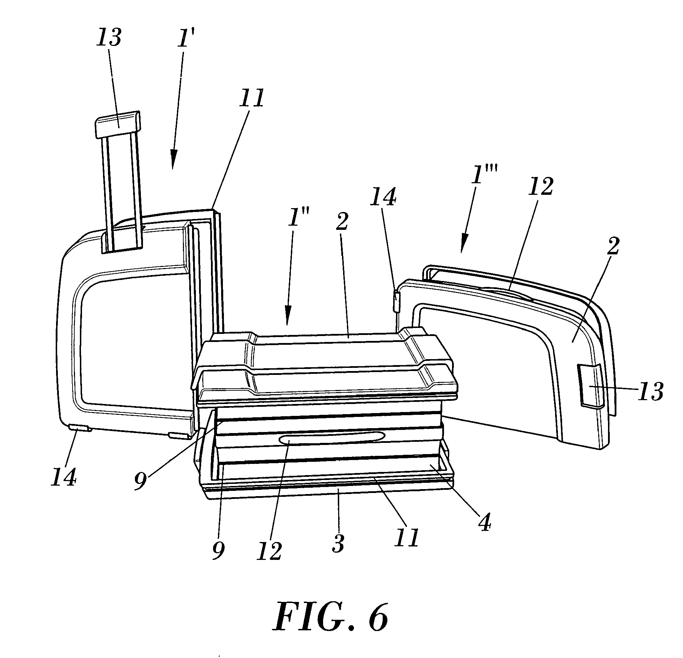

In this second embodiment, where after the tray is extracted from inside the vehicle and the modules (1', 1 ", 1'") that constitute it have been separated and each can be used as a suitcase (figure 6), it has been deemed suitable for the foldable walls (4) to have two openings (5) closed by zippers (9), in order to make more comfortable their use as suitcases out of the vehicle. The number of openings (5), as well as their closure, can vary from one module (1', 1 ", 1"') to another, so that one of them, for example, can have a single opening (5) closed by a zipper (9) while another module (1', 1", 1''') can have two openings (5), one closed by buckles and the other by clips.

With this same object of adapting its constitution to its possible use as a suitcase, gripping elements (12, 13) are incorporated in each module (1',1", 1'") and rolling means (14) are incorporated in some of them. Thus, each lateral module (1', 1'") of the tray has a conventional handle (12) on one of the sides and a folding handle (13) on its top, opposite the wheels provided on its bottom, so that the lateral modules can be used as a small trolley suitcase by pulling on a folding handle (13). However, the central module (1 ") of the tray incorporates a single handle (12) on one of its sides, as its preferred application is as a conventional suitcase. Figure 6 represents the set of suitcases which can be permanently transported in the vehicle without implying a significant reduction in the capacity of the boot, as shown in figure 4.

Although this second embodiment described a tray comprising three modules (1', 1", 1'"), their number can be any from two onwards, and the shape of each one can be other than that shown, as long as the modules are complementary of one another and after being attached to one another by the suitable attachment means (11) they form a tray with a shape and size similar to the space available inside the vehicle for its installation.

Since, as mentioned before, each module (1', 1 ", 1''') comprises means (6) for attachment to the vehicle in addition to the means (11) for attachment between modules (1', 1", 1"'), it is possible to extract one or several modules (1', 1", 1"') to use as a suitcase, while the remaining modules remain installed in the vehicle, whether folded to occupy the minimum possible space or unfolded to contain objects in them.

## Claims

1. Package tray configured to be coupled in a horizontal position on the upper part of the area comprised between the passenger compartment and the boot of a vehicle, **characterised in that** it comprises at least one module (1, 1', 1 ", 1"') which comprises:
a first panel (2);
a second panel (3) parallel to the first panel (2);
a foldable wall (4) which runs peripherally from the first panel (2) to the second panel (3), configuring between said panels (2, 3) movable with respect to each other, a compartment of a variable height allowing to store objects in it, access to which is provided through at least one opening (5) made in said foldable wall (4); and
means (6) for attaching said module (1, 1', 1 ", 1''') in the corresponding area.

2. Tray according to the previous claim, **characterised in that** the means (6) for attaching the module (1, 1', 1",1''') are provided in the first panel (2), which remains fixed.

3. Tray according to claim 1, **characterised in that** the means (6) for attaching the module (1, 1', 1", 1"') are provided in the second panel (3), which remains fixed.

4. Tray according to claim 1, **characterised in that** it comprises attachment means (7, 8) that join the panels (2, 3), the wall (4) remaining folded.

5. Tray according to claim 4, **characterised in that** the attachment means (7, 8) consist of a first magnet (7) provided on the first panel (2) and a second magnet in correspondence with said first magnet (7), provided on the second panel (3).

6. Tray according to claim 1, **characterised in that** it comprises means (9) for closing the opening (5) made in the foldable wall (4).

7. Tray according to claim 6, **characterised in that** the closure means (9) consist of a zipper (9).

8. Tray according to claim 1, **characterised in that** it comprise at least one folding dividing panel (10) inside the compartment, said dividing panel (10) ranging from the first panel (2) to the second panel (3) to divide the compartment into at least two parts.

9. Tray according to claim 1, **characterised in that** it comprises stiffening means (15) that allow to maintain the foldable wall (4) unfolded.

10. Tray according to claim 9, **characterised in that** the stiffening means (15) consist of telescopic rods (15) placed inside the compartment which extend from the first panel (2) to the second panel (3).

11. Tray according to any of the previous claims, **characterised in that** it comprises a single module (1) that covers the upper part of the area comprised between the passenger compartment and the boot.

12. Tray according to any of claims 1, 2, 3, 4, 5, 6, 7, 8, 9 and 10 **characterised in that** it comprises at least two adjacent modules (1', 1 ", 1"') that cover the upper part of the area comprised between the passenger compartment and the boot.

13. Tray according to claim 12, **characterised in that** the modules (1', 1", 1"') comprise attachment means (11) for maintaining the adjacent modules (1', 1 ", 1'") next to each other.

14. Tray according to claim 13, **characterised in that** the attachment means (11) consist of a tongue and groove arrangement (11) made in the perimeters of the first panels (2) and second panels (3).

15. Tray according to claim 12, **characterised in that** the modules (1', 1", 1''') comprise grip elements (12, 13).

16. Tray according to claim 12, **characterised in that** the modules (1', 1", 1"') comprise rolling means (14).

17. Tray according to claim 12, **characterised in that** it comprises a concealment element that covers the first panel (2) of the module (1', 1 ", 1"').
